(19) Europäisches Patentamt
European Patent Office
Office européen des brevets

(11) **EP 4 672 805 A1**

(12) **EUROPEAN PATENT APPLICATION**
published in accordance with Art. 153(4) EPC

(43) Date of publication:
**31.12.2025 Bulletin 2026/01**

(21) Application number: **23923438.8**

(22) Date of filing: **24.02.2023**

(51) International Patent Classification (IPC):
***H04W 24/10*** *(2009.01)*

(52) Cooperative Patent Classification (CPC):
**H04W 24/10**

(86) International application number:
**PCT/CN2023/078267**

(87) International publication number:
**WO 2024/174263 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **WU, Shijuan
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **INTERFERENCE MEASUREMENT REPORTING METHOD AND APPARATUS, DEVICE, AND
STORAGE MEDIUM**

(57)     Disclosed are an interference measurement reporting method and apparatus, a device, and a storage medium, which relate to the technical field of communications. The method is executed by a terminal, and the method comprises: determining the reporting priority of interference measurement. According to the method, a solution can be provided for a reporting priority determination method for interference measurement, thereby ensuring that the number of interference measurements reported by the terminal is within the processing capability range of a terminal device.

A reporting priority of the interference measurement is determined

210

Fig. 2

**EP 4 672 805 A1**

# Description

## FIELD

Embodiments of the present disclosure relates to the field of communication technologies, and in particular to a method and an apparatus for reporting an interference measurement, a communication device and a storage medium.

## BACKGROUND

In a communication scenario of dynamic time division duplex (DTDD), data transmission directions of terminals or network devices in adjacent cells are inconsistent, which will cause interference. In order to measure the interference between the terminals in adjacent cells, a layer-3-based cross link interference (CLI) reporting configuration is defined.

In order to further improve a reporting performance of a CLI measurement, it is determined that the UE-to-UE CLI may be reported based on layer 1/layer 2. Compared with layer 3 reporting, a corresponding reporting period may be shortened, thus adapting to different CLI scenarios more flexibly.

However, due to a limited processing capacity of the terminal, on the basis of supporting layer 1/layer 2 reporting, there are cases where the number of CLI measurements processed exceeds the processing capacity of the terminal, and the understanding between the terminal and a base station is inconsistent.

## SUMMARY

Embodiments of the present disclosure provides a method and an apparatus for reporting an interference measurement, a communication device, and a storage medium, which may provide a solution to a method for determining a reporting priority of the interference measurement. The technical scheme is as follows.

According to embodiments of a first aspect of the present disclosure, a method for reporting an interference measurement is provided. The method is performed by a terminal, and includes: determining a reporting priority of the interference measurement.

According to embodiments of a second aspect of the present disclosure, a method for reporting an interference measurement is provided. The method is performed by a network device, and includes: determining a reporting priority of the interference measurement for a terminal.

According to embodiments of a third aspect of the present disclosure, an apparatus for reporting an interference measurement is provided. The apparatus is used to realize a terminal, and includes: a priority determining module configured to determine a reporting priority of the interference measurement.

According to embodiments of a fourth aspect of the present disclosure, an apparatus for reporting an interference measurement is provided. The apparatus is used to realize a network device, and includes: a priority determining module configured to determine a reporting priority of the interference measurement for a terminal.

According to embodiments of a fifth aspect of the present disclosure, a terminal is provided, and includes: a processor; and a transceiver connected with the processor. The processor is configured to load and execute executable instructions to perform the above method for reporting the interference measurement.

According to embodiments of a sixth aspect of the present disclosure, a network device is provided, and includes: a processor; and a transceiver connected with the processor. The processor is configured to load and execute executable instructions to perform the above method for reporting the interference measurement.

According to embodiments of a seventh aspect of the present disclosure, a computer-readable storage medium is provided, for storing computer programs, which, when executed by a processor, cause the above method for reporting the interference measurement to be performed.

According to embodiments of an eight aspect of the present disclosure, a computer program product or a computer program is provided, which includes computer instructions stored in a computer-readable storage medium, which, when read from the computer-readable storage medium and executed by a processor, cause the above method for reporting the interference measurement to be performed.

The technical scheme provided by the embodiments of the present disclosure may have the following beneficial effects.

A solution for determining the reporting priority of the interference measurement is provided. The terminal and the network device respectively determine the reporting priority of the interference measurement for the terminal, so as to ensure that the number of interference measurements reported by the terminal is within the processing capacity range of the terminal, thus realizing the consistent understanding between the terminal and a base station.

## BRIEF DESCRIPTION OF THE DRAWINGS

In order to explain the technical scheme in the embodiments of the present disclosure more clearly, the drawings needed in the description of the embodiments will be briefly introduced below. Obviously, the drawings in the following description are only some embodiments of the present disclosure. For those ordinary skilled in the related art, other drawings may be obtained according to these drawings without creative work.

Fig. 1 is a schematic diagram of a communication system provided by an illustrative embodiment of the present disclosure.

Fig. 2 is a flowchart of a method for reporting an interference measurement provided by an illustrative embodiment of the present disclosure.

Fig. 3 is a flowchart of a method for reporting a CLI measurement provided by an illustrative embodiment of the present disclosure.

Fig. 4 is a flowchart of a method for reporting a CLI measurement provided by an illustrative embodiment of the present disclosure.

Fig. 5 is a flowchart of a method for reporting a CLI measurement provided by an illustrative embodiment of the present disclosure.

Fig. 6 is a flowchart of a method for reporting a CLI measurement provided by an illustrative embodiment of the present disclosure.

Fig. 7 is a flowchart of a method for reporting an interference measurement provided by an illustrative embodiment of the present disclosure.

Fig. 8 is a flowchart of a method for reporting a CLI measurement provided by an illustrative embodiment of the present disclosure.

Fig. 9 is a flowchart of a method for reporting a CLI measurement provided by an illustrative embodiment of the present disclosure.

Fig. 10 is a flowchart of a method for reporting a CLI measurement provided by an illustrative embodiment of the present disclosure.

Fig. 11 is a flowchart of a method for reporting a CLI measurement provided by an illustrative embodiment of the present disclosure.

Fig. 12 is a block diagram of an apparatus for reporting a CLI measurement provided by an illustrative embodiment of the present disclosure.

Fig. 13 is a block diagram of an apparatus for reporting a CLI measurement provided by an illustrative embodiment of the present disclosure.

Fig. 14 is a block diagram of a communication device provided by an illustrative embodiment of the present disclosure.

## DETAILED DESCRIPTION

In order to make the purpose, technical scheme and advantages of the present disclosure more clear, embodiments of the present disclosure will be further described in detail with reference to the accompanying drawings.

Reference will now be made in detail to illustrative embodiments, examples of which are illustrated in the accompanying drawings. When the following description refers to the drawings, unless otherwise indicated, the same numbers in different drawings indicate the same or similar elements. The implementations described in the following illustrative embodiments do not represent all the implementations consistent with the present disclosure. Rather, they are merely examples of apparatuses and methods consistent with some aspects of the present disclosure as detailed in the appended claims.

The terms used in the present disclosure are for the purpose of describing specific embodiments only and are not intended to limit the present disclosure. The singular forms "a", "the" and "said" used in the present disclosure and the appended claims are also intended to include the plural forms, unless the context clearly indicates other meaning. It should also be understood that the term "and/or" as used herein refers to and includes any or all possible combinations of one or more associated listed items.

It should be noted that all the user information (including but not limited to user equipment information, user personal information, etc.) and data (including but not limited to data for analysis, stored data, displayed data, etc.) involved in the present disclosure are information and data authorized by users or fully authorized by all parties, and the collection, use and processing of relevant data need to comply with relevant laws, regulations and standards of relevant countries and regions.

It should be understood that although the terms first, second, etc. may be used to describe various information in the present disclosure, such information should not be limited to these terms. These terms are only used to distinguish the same type of information from each other. For example, without departing from the scope of the present disclosure, the first parameter may also be called the second parameter, and similarly, the second parameter may also be called the first parameter. Depending on the context, the word "if" as used herein may be interpreted as "when" or "while" or "in response to determining...".

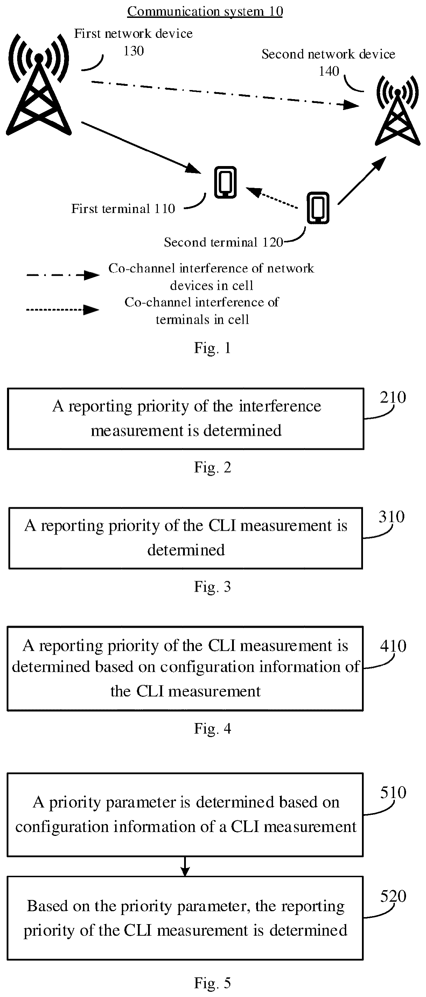

Fig. 1 is a block diagram of a communication system 10 provided by an illustrative embodiment of the present disclosure. The communication system 10 includes a terminal and a network device, the terminal includes a first terminal 110 and a second terminal 120, and the network device includes a first network device 130 and a second network device 140.

The terminal may refer to a user equipment (UE), an access terminal, a subscriber unit, a subscriber station, a mobile station, a remote station, a remote terminal, a mobile device, a wireless communication device, a user agent or a user device. Optionally, the terminal may also be a cellular phone, a cordless phone, a session initiation protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal in a 5th generation system (5GS) or a terminal in a future evolved public land mobile network (PLMN), etc., which is not limited in the embodiments of the present disclosure. For the convenience of description, the above devices are collectively referred to as terminals. Multiple terminals are usually arranged, and one or more terminals may be distributed in a cell managed by each network device.

The network device is a device deployed in an access network to provide a wireless communication function for the terminal. The network device may include various forms of macro base stations, micro base stations, relay stations, access points and so on. In systems with different wireless access technologies, the names of devices with network device functions may be different. For example, in a 5th generation new radio (5G NR) system, it is called a next generation base station (gNB). With the evolution of communication technologies, the name "network device" may change. For convenience of description, in the embodiments of the present disclosure, the above devices providing the wireless communication function for the terminal are collectively referred to as network devices. For example, in a long term evolution (LTE) system, the network device may be an evolved universal terrestrial radio access network (EUTRAN) or one or more evolved base stations in the EUTRAN; and in the 5G NR system, the network device may be a radio access network (RAN) or one or more gNBs in the RAN.

In the embodiments of the present disclosure, the terms "network" and "system" are usually used interchangeably, but those skilled in the art may understand their meanings. The technical scheme described in the embodiments of the present disclosure may be applied to the LTE system, the 5G system, a subsequent evolution system of the 5G NR system or other communication systems, which is not limited in the present disclosure.

Fig. 2 is a flowchart of a method for reporting an interference measurement provided by an embodiment. This method is performed by the terminal in the communication system shown in Fig. 1, for example. The method may include the following step.

In step 210, a reporting priority of the interference measurement is determined.

In some embodiments, there is certain communication interference in a communication scene, such as interference between terminals, interference between base stations, interference between different channels, etc. In a case that the terminal needs to measure specific communication interference and report it to the base station, due to a limited processing capacity of the terminal, the terminal needs to determine the interference measurement to be reported based on a reporting priority.

In some embodiments, the reporting priority refers to a reporting priority adopted by the terminal when reporting a measurement result of communication interference.

In some embodiments, the reporting of the interference measurement includes at least one of reporting of a cross link interference (CLI) measurement and reporting of a channel state information (CSI) measurement.

It should be understood that the reporting of the CLI measurement and the reporting of the CSI measurement are only illustrative examples of a reporting type of the interference measurement, and the method for reporting the interference measurement provided by the present disclosure may also be used for other types of reporting of the interference measurement, which is not limited by the present disclosure.

For example, in a communication scenario of dynamic time division duplex (DTDD), data transmission directions of adjacent cells are inconsistent, which will cause interference. As shown in Fig. 1, there is interference between the first terminal 110 and the second terminal 120, and there is interference between the first network device 130 and the second network device 140.

In order to measure the interference between the terminals in adjacent cells, CLI-reference signal received power (RSRP) and CLI-received signal strength indication (RSSI) are used to measure the RSRP and RSSI interference between corresponding terminals, and a CLI reporting protocol framework based on layer 3 (L3) is defined.

In order to further solve the problem of CLI and improve the reporting performance of CLI measurement, it is determined that the CLI measurement may be reported based on layer 1/layer 2 (L1/L2). On the basis that relevant protocols support the reporting of the CLI measurement based on L1/L2, the terminal should perform the reporting of the CLI measurement based on the corresponding reporting configuration of the CLI measurement. In order to reduce the cross link interference between the terminals, the following potential enhancement functions are considered in the relevant protocols: for L1/L2-based cross link interference reporting between terminals, periodic, semi-persistent and aperiodic reporting, and event triggered reporting to be further studied; and for L1/L2-based cross link interference measurement between terminals, periodic, semi-persistent or aperiodic measurement resources.

On the basis of supporting the L1/L2-based reporting, due to the limited processing capacity of the terminal, there is a situation that the number of CLI measurement reporting processed by the terminal (simultaneously) exceeds the processing capacity range of the terminal, and it is necessary to design a mechanism to define the reporting priority of the CLI measurement. Therefore, the embodiments of the present disclosure provide a way for the terminal to determine the reporting priority of the CLI measurement, so as to ensure that the number of CLI measurements reported by the terminal is within the processing capacity range of the terminal.

Fig. 3 is a flowchart of a method for reporting a CLI measurement provided by an embodiment of the present disclosure. This embodiment is described by taking an example that this method is performed by the terminal in the communication system shown in Fig. 1. The method may include the following step.

In step 310, a reporting priority of the CLI measurement is determined.

The reporting priority is used to instruct the terminal to report the CLI measurement.

In some embodiments, due to the limited processing capacity of the terminal, there is a situation that the number of CLI measurements exceeds the processing capacity range of the terminal, so it is necessary to determine the reporting priority of the CLI measurement, and determine the CLI measurement to be reported from a plurality of CLI measurements based on the reporting priorities of the CLI measurements.

For example, in a case that the number of CLI measurement calculations that the terminal may process simultaneously is defined as a parameter $N_{CPU}$, and for current N CLI measurements, the threshold of the processing number of CLI measurements that the terminal may process is denoted as M, so that based on the reporting priorities of the CLI measurements, the terminal abandons the transmission of $(N_{CPU} - M)$ CLI measurements with lower reporting priorities.

Optionally, the threshold M of the processing number is configured by the terminal based on the processing capacity, or the threshold M of the processing number is calculated and determined by the terminal in real time based on the processing situation.

For example, in a case that the threshold M of the processing number is calculated and determined by the terminal in real time based on the processing situation, the threshold M of the processing number may be determined by a formula $\sum_{n=0}^{M-1} O_{CPU}^{(n)} \leq N_{CPU} - L$, where $L$ is the number of CPUs occupied by the terminal at a current orthogonal frequency division multiplexing (OFDM) symbol, and the threshold M of the processing number is realized as the maximum value meeting the above formula.

It is to be noted that the way to determine the threshold M of the processing number is only an illustrative example, which is not limited in the present disclosure.

It should be understood that the reporting priority of the CLI measurement may be pre-configured by the network device, determined by the terminal, or determined in a predefined way, which is not limited in the present disclosure.

In some embodiments, the terminal also needs to calculate and/or report a CSI measurement, and in this case, there are two processing requirements as follows.

First, it is required to reduce the processing complexity of the terminal.

Under this requirement, the terminal does not expect to perform calculations of the CSI measurement and the CLI measurement simultaneously in the same time domain, such as on the same OFDM symbol; and/or the terminal does not expect to perform reporting of the CSI measurement and the CLI measurement simultaneously in the same time domain, such as on the same OFDM symbol.

Optionally, within the processing capacity range of the terminal, the CSI measurement reporting or the CSI measurement calculation is preferentially processed, or the CLI measurement reporting or the CLI measurement calculation is preferentially processed.

For example, it is determined that the reporting priority of the CSI measurement is higher than the reporting priority of the CLI measurement, or it is determined that the reporting priority of the CSI measurement is lower than the reporting priority of the CLI measurement. The reporting priority of the CSI measurement is used to instruct the terminal to perform the CSI measurement calculation or the CSI measurement reporting, and the reporting priority of the CLI measurement is used to instruct the terminal to perform the CLI measurement calculation or the CLI measurement reporting.

Second, it is required to improve the reporting flexibility of the terminal.

Under this requirement, the terminal may process the CSI measurement calculation and the CLI measurement calculation simultaneously; and/or the terminal may process the CSI measurement reporting and the CLI measurement reporting simultaneously.

In some embodiments, the processing numbers of the CSI measurement calculations and the CLI measurement calculations that the terminal may process simultaneously are defined respectively, and the terminal processes the CSI measurement calculations and the CLI measurement calculations simultaneously based on the processing number of the CSI measurement calculations and the processing number of the CLI measurement calculations. The processing number of the CSI measurement calculations and the processing number of the CLI measurement calculations may be pre-configured by the network device or defined by the terminal based on the processing capacity, which is not limited in the present disclosure. The reporting priority of the CSI measurement and the reporting priority of the CLI measurement are determined respectively, and the terminal performs the CLI measurement reporting at a corresponding time-frequency domain position based on the reporting priority of the CSI measurement and the reporting priority of the CLI measurement. The reporting priority of the CSI measurement may be pre-configured by the network device or agreed by the protocol, and the reporting priority of the CLI measurement may be pre-configured by the network device or defined by the terminal.

To sum up, the technical scheme provided in this embodiment provides a solution to determine the reporting priority of the interference measurement. The terminal determines the reporting priority of the interference measurement to ensure that the number of interference measurements reported by the terminal is within the processing capacity range of the terminal.

In some embodiments, the reporting priority of the CLI measurement is determined based on configuration information of the CLI measurement.

Fig. 4 is a flowchart of a method for reporting a CLI measurement provided by an illustrative embodiment of the present disclosure. This embodiment is described by taking an example that this method is performed by the terminal in the communication system shown in Fig. 1. The method may include the following step.

In step 410, a reporting priority of the CLI measurement is determined based on configuration information of the CLI measurement.

The configuration information of the CLI measurement is used to instruct the terminal to report the CLI measurement.

Optionally, the configuration information of the CLI measurement may be pre-configured by the network device or agreed by the protocol.

In some embodiments, the configuration information of the CLI measurement includes at least one of:

   a reporting type;
   a reporting number threshold;
   a measurement type;
   a serving cell number threshold of the terminal;
   a serving cell index; and
   a CLI measurement identifier.

The reporting type indicates a reporting mode of the CLI measurement, such as a reporting period of the CLI measurement or a channel used for reporting the CLI measurement.

In some embodiments, the reporting type includes a reporting period type and a reporting channel type. The reporting period type includes at least one of an aperiodic type, a periodic type and a semi-persistent type. A reporting channel is a channel where the terminal reports a measurement result, and the reporting channel type includes at least one of a physical uplink control channel (PUCCH) and a physical uplink shared channel (PUSCH). The terminal may report the measurement result based on the above reporting channel. For example, the terminal reports the CLI measurement based on the PUCCH or PUSCH.

For the periodic type, the reporting of the CLI measurement is periodical and does not need to be triggered. After the relevant configuration takes effect, the terminal directly reports periodically according to the relevant configuration.

For the semi-persistent type, after receiving an activation command, the terminal reports the CLI measurement periodically; and after receiving a deactivation command, the terminal ends the reporting of the CLI measurement.

For the aperiodic type, the reporting of the CLI measurement is not periodical, and the terminal reports the CLI measurement after downlink control information (DCI) sent by the network device triggers reporting.

The reporting number threshold indicates an upper limit of the number of CLI measurements reported by the terminal, that is, the number of CLI measurements reported by the terminal does not exceed the reporting number threshold.

In some embodiments, the reporting number threshold is realized as the above threshold M of the processing number, that is, the reporting number threshold is determined based on the processing capacity of the terminal for the CLI measurement.

In some embodiments, the reporting number threshold is realized as a parameter maxNrofCLI-ReportConfigurations, where the parameter maxNrofCLI-ReportConfigurations may be a parameter pre-configured by the network device for the terminal or a parameter agreed by the protocol, and indicates the upper limit of the number of CLI measurements reported by the terminal.

The measurement type indicates a measurement content corresponding to the CLI measurement.

In some embodiments, the measurement type includes at least one of a reference signal receiving power (RSRP) and a received signal strength indication (RSSI).

The serving cell number threshold of the terminal indicates an upper limit of the number of cells that the terminal may serve, that is, the number of cells that the terminal may serve does not exceed the serving cell number threshold of the terminal.

In some embodiments, the serving cell number threshold is realized as a parameter maxNrofServingCells, where the parameter maxNrofServingCells may be a parameter pre-configured by the network device for the terminal or a parameter agreed by the protocol, and indicates the upper limit of the number of cells that the terminal may serve.

The serving cell index indicates a serving cell currently corresponding to the terminal.

The CLI measurement identifier indicates a single CLI measurement.

In some embodiments, the CLI measurement identifier is realized as a parameter reportConfigID, where the parameter reportConfigID may be a parameter pre-configured by the network device for the terminal or a parameter agreed by the protocol, and indicates an individual CLI measurement.

In some embodiments, the reporting priority of the CLI measurement is determined based on the reporting type.

Optionally, the reporting priority of the CLI measurement is determined based on the reporting period type, and/or the reporting priority of the CLI measurement is determined based on the reporting channel type, and/or the reporting priority of the CLI measurement is determined based on the reporting period type and the reporting channel type.

In some embodiments, in scenarios where other conditions are the same, the reporting priorities of the CLI measurements corresponding to different reporting period types are, from high to low, the reporting priority corresponding to the periodic type, the reporting priority corresponding to the semi-persistent type and the reporting priority corresponding to the aperiodic type in sequence; or the reporting priorities of the CLI measurements corresponding to different reporting period types are, from high to low, the reporting priority corresponding to the non-periodic type, the reporting priority corresponding to the semi-persistent type and the reporting priority corresponding to the periodic type in sequence.

In some embodiments, in scenarios where other conditions are the same, the relationship between the reporting priorities of the CLI measurements corresponding to different reporting channel types is realized as follows: the reporting priority of the CLI measurement carried on the PUCCH is higher than the reporting priority of the CLI measurement carried on the PUSCH, or the reporting priority of the CLI measurement carried on the PUCCH is lower than the reporting priority of the CLI measurement carried on the PUSCH.

In some embodiments, in scenarios where other conditions are the same, the reporting priorities of the CLI measurements corresponding to different reporting types are, from high to low, the reporting priority corresponding to the aperiodic type carried on the PUSCH, the reporting priority corresponding to the semi-persistent type carried on the PUSCH, the reporting priority corresponding to the semi-persistent type carried on the PUCCH and the reporting priority corresponding to the aperiodic type carried on the PUCCH in sequence.

In some embodiments, in scenarios where other conditions are the same, the reporting priorities of the CLI measurements corresponding to different reporting types are, from low to high, the reporting priority corresponding to the aperiodic type carried on the PUSCH, the reporting priority corresponding to the semi-persistent type carried on the PUSCH, the reporting priority corresponding to the semi-persistent type carried on the PUCCH and the reporting priority corresponding to the aperiodic type carried on the PUCCH in sequence.

In some embodiments, in a case that the terminal determines the reporting priority based on the configuration information of the CLI measurement, the terminal determines a priority parameter based on the configuration information of the CLI measurement, and determines the reporting priority of the CLI measurement based on the priority parameter.

Fig. 5 is a flowchart of a method for reporting a CLI measurement provided by an embodiment of the present disclosure. This embodiment is described by taking an example that this method is performed by the terminal in the communication system shown in Fig. 1. The method may include the following steps.

In step 510, a priority parameter is determined based on configuration information of a CLI measurement.

The priority parameter is used to determine the reporting priority of the CLI measurement.

In some embodiments, a corresponding priority parameter denoted as y' is determined based on the reporting type.

In some embodiments, a corresponding priority parameter denoted as $k'$ is determined based on the measurement type.

In some embodiments, a corresponding priority parameter denoted as c is determined based on the serving cell index.

In some embodiments, a corresponding priority parameter denoted as s' is determined based on the CLI measurement identifier.

In some embodiments, a corresponding priority parameter denoted as $N_{cells}$ is determined based on the serving cell number threshold.

In some embodiments, a corresponding priority parameter denoted as $M_s'$ is determined based on the reporting number threshold.

In step 520, based on the priority parameter, the reporting priority of the CLI measurement is determined.

In some embodiments, the reporting priority of the CLI measurement is determined based on the priority parameter *y'*.

Optionally, the priority parameter *y'* is positively correlated with the reporting priority of the CLI measurement, or the priority parameter *y'* is negatively correlated with the reporting priority of the CLI measurement.

In some embodiments, based on the priority parameter *k'*, the reporting priority of the CLI measurement is determined.

Optionally, the priority parameter *k'* is positively correlated with the reporting priority of the CLI measurement, or the priority parameter *k'* is negatively correlated with the reporting priority of the CLI measurement.

In some embodiments, based on the priority parameter *c,* the reporting priority of the CLI measurement is determined.

Optionally, the priority parameter *c* is positively correlated with the reporting priority of the CLI measurement, or the priority parameter *c* is negatively correlated with the reporting priority of the CLI measurement.

In some embodiments, based on the priority parameter *s'*, the reporting priority of the CLI measurement is determined.

Optionally, the priority parameter *s'* is positively correlated with the reporting priority of the CLI measurement, or the priority parameter *s'* is negatively correlated with the reporting priority of the CLI measurement.

In some embodiments, based on the priority parameter $N_{cells}$, the reporting priority of the CLI measurement is determined.

Optionally, the priority parameter $N_{cells}$ is positively correlated with the reporting priority of the CLI measurement, or the priority parameter $N_{cells}$ is negatively correlated with the reporting priority of the CLI measurement.

In some embodiments, based on the priority parameter $M_s'$, the reporting priority of the CLI measurement is determined.

Optionally, the priority parameter $M_s'$ is positively correlated with the reporting priority of the CLI measurement, or the priority parameter $M_s'$ is negatively correlated with the reporting priority of the CLI measurement.

In some embodiments, the reporting priority of the CLI measurement is determined based on priority parameters corresponding to a plurality of pieces of configuration information.

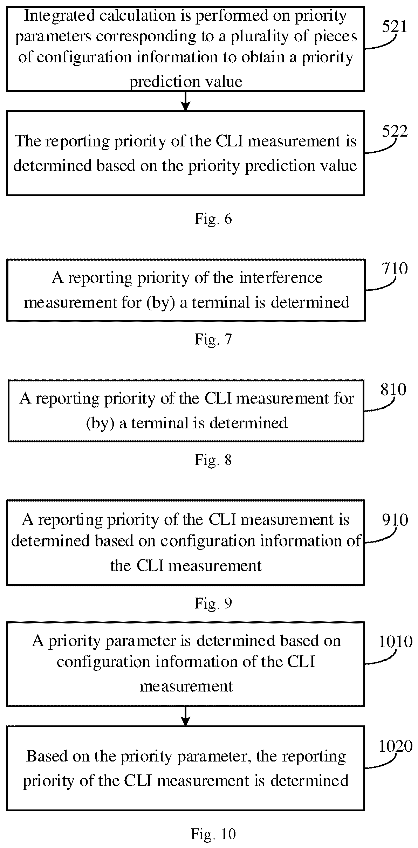

Fig. 6 is a flowchart of a method for reporting a CLI measurement provided by an embodiment of the present disclosure. This embodiment is described by taking an example that this method is performed by the terminal in the communication system shown in Fig. 1. As shown in Fig. 6, the above step 520 may include the following steps.

In step 521, integrated calculation is performed on priority parameters corresponding to a plurality of pieces of configuration information to obtain a priority prediction value.

Optionally, a configuration mode of the reporting of the CLI measurement includes the following two situations.

<u>First</u>, the reporting of the CLI measurement is configured independently of reporting of a CSI measurement.

In some embodiments, in a case that the reporting of the CLI measurement is configured independently of the reporting of the CSI measurement, the integrated calculation is performed on the priority parameters corresponding to the plurality of pieces of configuration information by adopting an independent configuration formula to obtain the priority prediction value.

In some embodiments, the above independent configuration formula is realized to add the priority parameters corresponding to the plurality of pieces of configuration information. For example, a product of the priority parameter corresponding to the serving cell number threshold, the priority parameter corresponding to the reporting number threshold and the priority parameter corresponding to the reporting type is taken as a first priority parameter; a product of the priority parameter corresponding to the serving cell number threshold, the priority parameter corresponding to the reporting number threshold and the priority parameter corresponding to the measurement type is taken as a second priority parameter; a product of the priority parameter corresponding to the reporting number threshold and the priority parameter corresponding to the serving cell index is taken as a third priority parameter; the priority parameter corresponding to the CLI measurement identifier is taken as a fourth priority parameter; and a plurality of priority parameters are selected from the first priority parameter to the fourth priority parameter and added to obtain the priority prediction value.

In some embodiments, the priority parameter *y'* corresponding to the reporting type is determined; the priority parameter *k* corresponding to the measurement type is determined; the priority parameter *c* corresponding to the serving cell index is determined; the priority parameter *s'* corresponding to the CLI measurement identifier is determined; the priority parameter $N_{cells}$ corresponding to the serving cell number threshold is determined; the priority parameter $M_s'$ corresponding to the reporting number threshold is determined; and the independent configuration formula is as follows:

$$\mathrm{Pri}_{iCLI}(y', k', c, s') = 2 \cdot N_{cells} \cdot M_s' \cdot y' + N_{cells} \cdot M_s' \cdot k' + M_s' \cdot c + s',$$

where $\text{Pri}_{iCLI}$ $(y', k', c, s')$ is the priority prediction value. Optionally, $\text{Pri}_{iCLI}$ $(y', k', c, s')$ is positively correlated with the reporting priority of the CLI measurement, or $\text{Pri}_{iCLI}$ $(y', k', c, s')$ is negatively correlated with the reporting priority of the CLI measurement.

In some embodiments, on the basis that the reporting type of the CLI measurement includes an aperiodic type, a semi-persistent type carried on a PUSCH, a semi-persistent type carried on a PUCCH and a periodic type, $y' = 0$ refers to an aperiodic CLI measurement carried on the PUSCH; $y' = 1$ refers to a semi-persistent CLI measurement carried on the PUSCH; $y' = 2$ refers to a semi-persistent CLI measurement carried on the PUCCH; and $y' = 3$ refers to a periodic CLI measurement carried on the PUCCH.

In some embodiments, in a case that the value of y' refers to the above values, when other conditions are the same, the value of $y'$ determined based on the reporting period type of the CLI measurement includes but is not limited to the following two cases.

1) The value of $y'$ corresponding to the aperiodic type is smaller than the value of $y'$ corresponding to the semi-persistent type and smaller than the value of $y'$ corresponding to the periodic type, and the value $y'$ corresponding to the semi-persistent type is smaller than the value of $y'$ corresponding to the periodic type.
For example, when the reporting type of the CLI measurement is the aperiodic type, $y' = 0$; When the reporting type of the CLI measurement is the semi-persistent type, $y' = 1$; When the reporting type of the CLI measurement is the periodic type, $y' = 3$ or $y' = 2$.
2) The value of $y'$ corresponding to the aperiodic type is greater than the value of $y'$ corresponding to the semi-persistent type and greater than the value of y' corresponding to the periodic type, and the value of $y'$ corresponding to the semi-persistent type is greater than the value of $y'$ corresponding to the periodic type.

For example, when the reporting type of the CLI measurement is the aperiodic type, $y' = 2$; when the reporting type of the CLI measurement is the semi-persistent type, $y' = 1$; when the reporting type of the CLI measurement is the periodic type, $y' = 0$; or, when the reporting type of the CLI measurement is the aperiodic type, $y = 3$; when the reporting type of the CLI measurement is the semi-persistent type, $y = 1$; when the reporting type of the CLI measurement is the periodic type, $y = 0$.

In some embodiments, in a case that the value of $y'$ refers to the above values and the reporting period types are the same, the value of $y'$ determined based on the reporting channel type of the CLI measurement includes but is not limited to the following two cases.

1) The value of $y'$ corresponding to the CLI measurement carried on the PUSCH is greater than the value of $y'$ corresponding to the CLI measurement carried on the PUCCH.
For example, when the CLI measurement is reported through the PUSCH, $y' = 1$; and when the CLI measurement is reported through the PUCCH, $y' = 0$.
2) The value of $y'$ corresponding to the CLI measurement carried on the PUSCH is smaller than the value of $y'$ corresponding to the CLI measurement carried on the PUCCH.

For example, when the CLI measurement is reported through the PUSCH, $y' = 0$; and when the CLI measurement is reported through the PUCCH, $y' = 1$.

In some embodiments, in a case that the measurement type includes at least one of a RSRP and a RSSI, corresponding to the CLI measurement carrying a CLI-RSRP or a CLI-RSSI, $k' = 0$; or, in this case, the priority parameter $k'$ does not exist, and the priority prediction value is determined only based on the priority parameters $y'$, c, and $s'$. At this time, the above independent configuration formula is as follows:

$$\text{Pri}_{iCLI}(y', c, s') = 2 \cdot N_{cells} \cdot M_s{}' \cdot y' + M_s{}' \cdot c + s',$$

where $\text{Pri}_{iCLI}$ $(y', c, s')$ is the priority prediction value.

In some embodiments, the value of $N_{cells}$ is the serving cell number threshold, for example, the serving cell number threshold is realized as a parameter maxNrofServingCells, and the value of $N_{cells}$ is for example equal to a value configured for the parameter maxNrofServingCells.

In some embodiments, the value of c is a value of a parameter corresponding to the serving cell index.

In some embodiments, the value of $M_s'$ is the reporting number threshold. For example, the reporting number threshold is realized as a parameter maxNrofCLI-ReportConfigurations, and the value of $M_s'$ is equal to a value configured for the parameter maxNrofCLI-ReportConfigurations.

In some embodiments, the value of $s'$ is a value of a parameter corresponding to the CLI measurement identifier.

For example, the CLI measurement identifier is configured with a parameter CLI reportConfigID, and the value of $s'$ is a value configured for the parameter CLI reportConfigID. In a case that the CLI measurement identifier is not configured with the parameter CLI reportConfigID, $s' = 0$.

It should be understood that the configuration mode of the above independent configuration formula and the values of reporting priorities corresponding to multiple parameters are only illustrative examples, which are not limited by the present disclosure.

In some embodiments, in a case that the reporting of the CLI measurement is configured independently of the reporting of the CSI measurement, when there is a case that the terminal simultaneously processes the reporting of the CLI measurement and the reporting of the CSI measurement on the same orthogonal frequency division multiplexing (OFDM), the reporting priority of the CLI measurement is lower than the reporting priority of the CSI measurement in the case that the terminal simultaneously processes the reporting of the CLI measurement and the reporting of the CSI measurement on the same orthogonal frequency division multiplexing (OFDM).

In some embodiments, the terminal does not expect to simultaneously process the reporting of the CLI measurement and the reporting of the CSI measurement on the same orthogonal frequency division multiplexing (OFDM). Optionally, the reporting priority of the CLI measurement is higher than the reporting priority of the CSI measurement, or the reporting priority of the CLI measurement is lower than the reporting priority of the CSI measurement.

Second, the reporting of the CLI measurement is configured based on the reporting of the CSI measurement.

In some embodiments, when the reporting of the CLI measurement is configured based on the reporting of the CSI measurement, the reporting of the CLI measurement is a special reporting of the CSI measurement, that is, the reporting of the CSI measurement includes the reporting of the CLI measurement. In this case, the reporting of the CSI measurement in this embodiment of the present disclosure refers to the reporting of the CSI measurement including the reporting of the CLI measurement.

In some embodiments, when the reporting of the CLI measurement is configured based on the reporting of the CSI measurement, the integrated calculation is performed on the priority parameters corresponding to the plurality of pieces of configuration information based on a priority configuration formula of the reporting of the CSI measurement to obtain the priority prediction value.

Optionally, the priority configuration formula of the reporting of the CSI measurement including the reporting of the CLI measurement may be agreed by the protocol or pre-configured by the network device.

For example, the priority configuration formula of the reporting of the CSI measurement is as follows:

$$\mathrm{Pri}_{iCSI}(y, k, c, s) = 2 \cdot N_{cells} \cdot M_s \cdot y + N_{cells} \cdot M_s \cdot k + M_s \cdot c + s,$$

where $\mathrm{Pri}_{iCSI}(y, k, c, s)$ is a priority prediction value corresponding to the reporting of the CSI measurement including the reporting of the CLI measurement, $y$ a priority parameter determined based on the reporting type of the reporting of the CSI measurement including the reporting of the CLI measurement, $k$ is a priority parameter determined based on the measurement type of the reporting of the CSI measurement including the reporting of the CLI measurement, $c$ is a priority parameter determined based on the serving cell index of the reporting of the CSI measurement including the reporting of the CLI measurement, $s$ is a priority parameter determined based on the CSI measurement identifier including the reporting of the CLI measurement, $N_{cells}$ is a priority parameter determined based on the serving cell number threshold, and $M_s$ is a priority parameter determined based on the reporting number threshold of the reporting of the CSI measurement including the reporting of the CLI measurement.

In some embodiments, the CLI measurement is a special CSI measurement. By introducing the configuration information of the CLI measurement and substituting it into the priority configuration formula of the reporting of the CSI measurement, the priority prediction value of the reporting of the CLI measurement is obtained.

In some embodiments, the value of $N_{cells}$ is the serving cell number threshold. In a case that the serving cell number threshold is realized as a parameter maxNrofServingCells, the value of $N_{cells}$ is equal to a value configured for the parameter maxNrofServingCells.

In some embodiments, the value of c is a value of a parameter corresponding to the serving cell index.

In some embodiments, the value of $M_s$ is the reporting number threshold. In a case that the reporting number threshold is realized as a parameter maxNrofCSI-ReportConfigurations, the value of $M_s$ is equal to a value configured for the parameter maxNrofCSI-ReportConfigurations.

In some embodiments, the value of s is a value of a parameter corresponding to the CLI measurement identifier. In a case that the CLI measurement identifier is configured with a parameter CLI reportConfigID, the value of s is equal to a value configured for the parameter CLI reportConfigID. In a case that the CLI measurement identifier is not configured with the parameter CLI reportConfigID, s = 0.

In some embodiments, $y = 0$ refers to an aperiodic CSI measurement carried on the PUSCH; $y = 1$ refers to a semi-persistent CSI measurement carried on the PUSCH; $y = 2$ refers to a semi-persistent CSI measurement carried on the PUCCH; $y = 3$ refers to a periodic CSI measurement carried on the PUCCH. Alternatively, $y = 3$ refers to an aperiodic CSI measurement carried on the PUSCH; $y = 2$ refers to a semi-persistent CSI measurement carried on the PUSCH; $y = 1$ refers to a semi-persistent CSI measurement carried on the PUCCH; $y = 0$ refers to a periodic CSI measurement carried on the PUCCH.

In some embodiments, in a case that the value of $y$ refers to the above values, when other conditions are the same, the value of $y$ determined based on the reporting period type of the reporting of the CSI measurement including the reporting of the CLI measurement includes but is not limited to the following two cases.

1) The value of $y$ corresponding to the aperiodic type is smaller than the value of $y$ corresponding to the semi-persistent type and smaller than the value of $y$ corresponding to periodic type, and the value of $y$ corresponding to the semi-persistent type is smaller than the value of $y$ corresponding to the periodic type.
For example, when the reporting type of the CSI measurement is the aperiodic type, $y = 0$; when the reporting type of the CSI measurement is the semi-persistent type, $y = 1$; when the reporting type of the CSI measurement is the periodic type, $y = 3$ or $y = 2$.
2) The value of $y$ corresponding to the aperiodic type is greater than the value of $y$ corresponding to the semi-persistent type and greater than the value of $y$ corresponding to the periodic type, and the value of $y$ corresponding to the semi-persistent type is greater than the value of $y$ corresponding to the periodic type.

For example, when the reporting type of the CSI measurement is the aperiodic type, $y = 2$; when the reporting type of the CSI measurement is the semi-persistent type, $y = 1$; when the reporting type of the CSI measurement is the periodic type, $y = 0$. Alternatively, when the reporting type of the CSI measurement is the aperiodic type, $y = 3$; when the reporting type of the CSI measurement is the semi-persistent type, $y = 1$; when the reporting type of the CSI measurement is the periodic type, $y = 0$.

In some embodiments, in a case that the value of $y$ refers to the above values and the reporting period types are the same, the value of $y$ determined based on the reporting channel type of the reporting of the CSI measurement including the reporting of the CLI measurement includes but is not limited to the following two cases.

1) The value of $y$ corresponding to the CSI measurement carried on the PUSCH is greater than the value of y corresponding to the CSI measurement carried on the PUCCH.
For example, when the CSI measurement is reported through the PUSCH, $y = 1$; and when the CSI measurement is reported through the PUCCH, $y = 0$.
2) The value of $y$ corresponding to the CSI measurement carried on the PUSCH is smaller than the value of y corresponding to the CSI measurement carried on the PUCCH.

For example, when the CSI measurement is reported through the PUSCH, $y = 0$; and when the CSI measurement is reported through the PUCCH, $y = 1$.

Taking performing the reporting of the CSI measurement including the reporting of the CLI measurement based on L1 as an example, the above value situation of $k$ will be explained in a case that the reporting of the CLI measurement is configured based on the reporting of the CSI measurement, where the measurement types include at least one of the CLI-RSRP, the CLI-RSSI, an L1-RSRP and an L1-signal to interference plus noise ratio (SINR).

In some embodiments, the reporting priority of the CLI measurement is higher than the reporting priority of the CSI measurement, and the value of $k$ is based on the following definitions: for the CLI measurement carrying the CLI-RSRP or the CLI-RSSI, $k = 0$; for the CSI measurement carrying the L1-RSRP or the L1-SINR, $k = 1$; for the CSI measurement without the L1-RSRP or the L1-SINR, $k = 2$.

In some embodiments, the reporting priority of the CLI measurement is lower than the reporting priority of the CSI measurement carrying the L1-RSRP or the L1-SINR, but higher than the reporting priorities of other CSI measurements, and the value of $k$ is based on the following definitions: for the CSI measurement carrying the L1-RSRP or the L1-SINR, $k = 0$; for the CLI measurement carrying the CLI-RSRP or the CLI-RSSI, $k = 1$; for the CSI measurement without the L1-RSRP or the L1-SINR, $k = 2$.

In some embodiments, the reporting priority of the CLI measurement is lower than the reporting priority of the CSI measurement, and the value of $k$ is based on the following definitions: for the CSI measurement carrying the L1-RSRP or the L1-SINR, $k = 0$; for the CSI measurement without the L1-RSRP or the L1-SINR, $k = 1$; for the CLI measurement carrying the CLI-RSRP or the CLI-RSSI, $k = 2$.

In some embodiments, the reporting priority of the CLI measurement is lower than the reporting priority of the CSI measurement carrying the L1-RSRP or the L1-SINR, and the value of $k$ is based on the following definitions: for the CSI measurement carrying the L1-RSRP or the L1-SINR, $k = 0$; for the CLI measurement or the CSI measurement without the L1-RSRP or the L1-SINR, $k = 1$.

In step 522, the reporting priority of the CLI measurement is determined based on the priority prediction value.

The priority prediction value is negatively correlated with the reporting priority, or the priority prediction value is positively correlated with the reporting priority.

For example, taking an example that the priority prediction value of the CLI measurement is $\text{Pri}_{iCLI}(y', k', c, s')$, the smaller the value of $\text{Pri}_{iCLI}(y', k', c, s')$, the higher the reporting priority of the CLI measurement, or the smaller the value of $\text{Pri}_{iCLI}(y', k', c, s')$, the lower the reporting priority of the CLI measurement.

In some embodiments, the terminal processes the reporting of the CLI measurement based on the reporting priority. For example, the terminal processes the reporting of the CLI measurements in the order of reporting priorities from high to low, that is, the terminal gives priority to the reporting of the CLI measurement with the high report priority.

Fig. 7 is a flowchart of a method for reporting an interference measurement provided by an embodiment. This method is performed by the network device in the communication system shown in Fig. 1, for example. The method may include the following steps.

In step 710, a reporting priority of the interference measurement is determined.

In some embodiments, there is certain communication interference in a communication scene, such as interference between terminals, interference between base stations, interference between different channels, etc. In a case that the terminal needs to measure specific communication interference and report it to the base station, due to a limited processing capacity of the terminal, the terminal needs to determine the interference measurement to be reported based on a reporting priority.

In some embodiments, the reporting of the interference measurement includes at least one of reporting of a CLI measurement and reporting of a CSI measurement.

On the basis of supporting the L1/L2-based reporting, due to the limited processing capacity of the terminal, there is a situation that the number of CLI measurement reporting processed by the terminal (simultaneously) exceeds the processing capacity range of the terminal, and it is necessary to design a mechanism to define the reporting priority of the CLI measurement. Therefore, the embodiments of the present disclosure provide a way for the terminal to determine the reporting priority of the CLI measurement, so as to ensure the consistent understanding between the terminal and the base station.

Fig. 8 is a flowchart of a method for reporting a CLI measurement provided by an embodiment of the present disclosure. This embodiment is described by taking an example that this method is performed by the network device in the communication system shown in Fig. 1. The method may include the following steps.

In step 810, a reporting priority of the CLI measurement for (by) a terminal is determined.

The reporting priority is used to determine the CLI measurement reported by the terminal.

In some embodiments, due to the limited processing capacity of the terminal, there is a situation that the number of CLI measurements exceeds the processing capacity range of the terminal, so it is necessary to determine the reporting priority of the CLI measurement, and determine the CLI measurement to be reported by the terminal based on the reporting priority of the CLI measurement by the terminal.

For example, in a case that the number of CLI measurement calculations that the terminal may process simultaneously is defined as a parameter $N_{CPU}$, and for current N CLI measurements, the threshold of the processing number of CLI measurements that the terminal may process is denoted as M, so that based on the reporting priorities of the CLI measurements, the network device determines that the terminal abandons the transmission of $(N_{CPU} - M)$ CLI measurements with lower reporting priorities.

It should be understood that the reporting priority of the CLI measurement may be pre-configured by the network device, determined by the terminal, or determined in a predefined way, which is not limited in the present disclosure.

In some embodiments, the terminal also needs to calculate and/or report a CSI measurement, and in this case, there are two processing requirements as follows.

First, it is required to reduce the processing complexity of the terminal.

Under this requirement, the terminal does not expect to perform calculations of the CSI measurement and the CLI measurement simultaneously in the same time domain, such as on the same OFDM symbol; and/or the terminal does not expect to perform reporting of the CSI measurement and the CLI measurement simultaneously in the same time domain, such as on the same OFDM symbol.

Optionally, within the processing capacity range of the terminal, the CSI measurement reporting or the CSI measurement calculation is preferentially processed, or the CLI measurement reporting or the CLI measurement calculation is preferentially processed.

For example, it is determined that the reporting priority of the CSI measurement is higher than the reporting priority of the CLI measurement, or it is determined that the reporting priority of the CSI measurement is lower than the reporting priority of the CLI measurement. The reporting priority of the CSI measurement is used to instruct the terminal to perform the CSI measurement calculation or the CSI measurement reporting, and the reporting priority of the CLI measurement is used to instruct the terminal to perform the CLI measurement calculation or the CLI measurement reporting.

Second, it is required to improve the reporting flexibility of the terminal.

Under this requirement, the terminal may process the CSI measurement calculation and the CLI measurement calculation simultaneously; and/or the terminal may process the CSI measurement reporting and the CLI measurement reporting simultaneously.

In some embodiments, the processing numbers of the CSI measurement calculations and the CLI measurement calculations that the terminal may process simultaneously are defined respectively, and the terminal processes the CSI measurement calculations and the CLI measurement calculations simultaneously based on the processing number of the CSI measurement calculations and the processing number of the CLI measurement calculations. The processing number of the CSI measurement calculations and the processing number of the CLI measurement calculations may be pre-configured by the network device or defined by the terminal based on the processing capacity, which is not limited in the present disclosure. The reporting priority of the CSI measurement and the reporting priority of the CLI measurement are determined respectively, and the terminal performs the CLI measurement reporting at a corresponding time-frequency domain position based on the reporting priority of the CSI measurement and the reporting priority of the CLI measurement. The reporting priority of the CSI measurement may be pre-configured by the network device or agreed by the protocol, and the reporting priority of the CLI measurement may be pre-configured by the network device or defined by the terminal.

To sum up, the technical scheme provided in this embodiment provides a solution to determine the reporting priority of the interference measurement. The network device determines the reporting priority of the interference measurement by the terminal to ensure that the number of interference measurements reported by the terminal is within the processing capacity range of the terminal, and the understanding between the terminal and the network device is consistent.

In some embodiments, the reporting priority of the CLI measurement is determined based on configuration information of the CLI measurement.

Fig. 9 is a flowchart of a method for reporting a CLI measurement provided by an illustrative embodiment of the present disclosure. This embodiment is described by taking an example that this method is performed by the network device in the communication system shown in Fig. 1. This method may include the following steps.

In step 910, a reporting priority of the CLI measurement is determined based on configuration information of the CLI measurement.

The configuration information of the CLI measurement is used to instruct the terminal to report the CLI measurement.

Optionally, the configuration information of the CLI measurement may be pre-configured by the network devices or agreed by the protocol.

In some embodiments, the configuration information of the CLI measurement includes at least one of:

a reporting type;
a reporting number threshold;
a measurement type;
a serving cell number threshold of the terminal;
a serving cell index; and
a CLI measurement identifier.

The reporting type indicates a reporting mode of the CLI measurement, such as a reporting period of the CLI measurement or a channel used for reporting the CLI measurement. The reporting number threshold indicates an upper limit of the number of CLI measurements reported by the terminal, that is, the number of CLI measurements reported by the terminal does not exceed the reporting number threshold. The measurement type indicates a measurement content corresponding to the CLI measurement. The serving cell number threshold of the terminal indicates an upper limit of the number of cells that the terminal may serve, that is, the number of cells that the terminal may serve does not exceed the serving cell number threshold of the terminal. The serving cell index indicates a serving cell currently corresponding to the terminal. The CLI measurement identifier indicates a single CLI measurement.

In some embodiments, the reporting type includes a reporting period type and a reporting channel type, the reporting period type includes at least one of an aperiodic type, a periodic type and a semi-persistent type, and the reporting channel type includes at least one of a PUCCH and a PUSCH.

In some embodiments, the measurement type includes at least one of a RSRP and a RSSI.

For the specific implementation details of the above method for reporting the CLI measurement reference is made to those at the terminal side, and details will not be repeated here.

In some embodiments, when the network device determines the reporting priority based on the configuration information of the CLI measurement, the network device determines a priority parameter based on the configuration information of the CLI measurement, and determines the reporting priority of the CLI measurement based on the priority parameter.

Fig. 10 is a flowchart of a method for reporting a CLI measurement provided by an embodiment of the present disclosure. This embodiment is described by taking an example that this method is performed by the network device in the communication system shown in Fig. 1. The method may include the following steps.

In step 1010, a priority parameter is determined based on configuration information of the CLI measurement.

The priority parameter is used to determine the reporting priority of the CLI measurement.

In step 1020, based on the priority parameter, the reporting priority of the CLI measurement is determined.

In some embodiments, the reporting priority of the CLI measurement is determined based on a priority parameter $y'$.

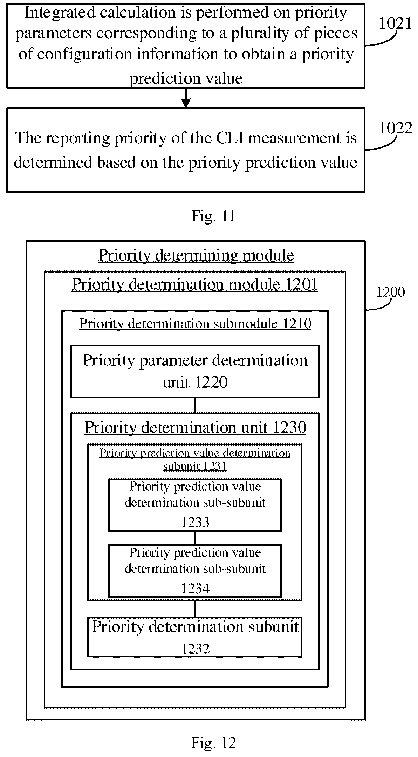

Fig. 11 is a flowchart of a method for reporting a CLI measurement provided by an embodiment of the present disclosure. This embodiment is described by taking an example that this method is performed by the network device in the communication system shown in Fig. 1. As shown in Fig. 11, the above step 1020 may include the following steps.

In step 1021, integrated calculation is performed on priority parameters corresponding to a plurality of pieces of configuration information to obtain a priority prediction value.

Optionally, a configuration mode of the reporting of the CLI measurement includes the following two situations.

First, the reporting of the CLI measurement is configured independently of reporting of a CSI measurement.

In some embodiments, in a case that the reporting of the CLI measurement is configured independently of the reporting of the CSI measurement, the integrated calculation is performed on the priority parameters corresponding to the plurality of pieces of configuration information by adopting an independent configuration formula to obtain the priority prediction value.

In some embodiments, in a case that the reporting of the CLI measurement is configured independently of the reporting of the CSI measurement, when there is a case that the terminal simultaneously processes the reporting of the CLI measurement and the reporting of the CSI measurement on the same orthogonal frequency division multiplexing (OFDM), the reporting priority of the CLI measurement is lower than the reporting priority of the CSI measurement in the case that the terminal simultaneously processes the reporting of the CLI measurement and the reporting of the CSI measurement on the same orthogonal frequency division multiplexing (OFDM).

In some embodiments, the terminal does not expect to simultaneously process the reporting of the CLI measurement and the reporting of the CSI measurement on the same orthogonal frequency division multiplexing (OFDM). Optionally, it is determined that the reporting priority of the CLI measurement by the terminal is higher than the reporting priority of the CSI measurement by the terminal, or that the reporting priority of the CLI measurement by the terminal is lower than the reporting priority of the CSI measurement by the terminal.

In some embodiments, a priority parameter $y'$ corresponding to the reporting type is determined; a priority parameter $k$ corresponding to the measurement type is determined; a priority parameter $c$ corresponding to the serving cell index is determined; a priority parameter $s'$ corresponding to the CLI measurement identifier is determined; a priority parameter $N_{cells}$ corresponding to the serving cell number threshold is determined; a priority parameter $M_s'$ corresponding to the reporting number threshold is determined; and the independent configuration formula is as follows:

$$\mathrm{Pri}_{iCLI}(y', k, c, s') = 2 \cdot N_{cells} \cdot M_s' \cdot y' + N_{cells} \cdot M_s' \cdot k + M_s' \cdot c + s',$$

where $\mathrm{Pri}_{iCLI}(y', k, s')$ is the priority prediction value. Optionally, $\mathrm{Pri}_{iCLI}(y', k, c, s')$ is positively correlated with the reporting priority of the CLI measurement, or $\mathrm{Pri}_{iCLI}(y', k, c, s')$ is negatively correlated with the reporting priority of the CLI measurement.

Second, the reporting of the CLI measurement is configured based on the reporting of the CSI measurement.

It is to be noted that in this case, the reporting of the CSI measurement refers to reporting of the CSI measurement including the reporting of the CLI measurement.

In some embodiments, when the reporting of the CLI measurement is configured based on the reporting of the CSI measurement, the integrated calculation is performed on the priority parameters corresponding to the plurality of pieces of configuration information based on a priority configuration formula of the reporting of the CSI measurement to obtain the priority prediction value.

Optionally, the priority configuration formula of the reporting of the CSI measurement including the reporting of the CLI measurement may be agreed by the protocol or pre-configured by the network device.

For example, the priority configuration formula of the reporting of the CSI measurement is as follows:

$$\mathrm{Pri}_{iCSI}(y, k, c, s) = 2 \cdot N_{cells} \cdot M_s \cdot y + N_{cells} \cdot M_s \cdot k + M_s \cdot c + s,$$

where $\mathrm{Pri}_{iCSI}(y, k, c, s)$ is a priority prediction value corresponding to the CSI measurement, $y$ a priority parameter determined based on the reporting type of the CSI measurement, $k$ is a priority parameter determined based on the measurement type of the CSI measurement, $c$ is a priority parameter determined based on the serving cell index of the CSI measurement, $s$ is a priority parameter determined based on the CSI measurement identifier, $N_{cells}$ is a priority parameter determined based on the serving cell number threshold, and $M_s$ is a priority parameter determined based on the reporting number threshold of the CSI measurement.

In some embodiments, the CLI measurement is a special CSI measurement. By introducing the configuration information of the CLI measurement and substituting it into the priority configuration formula of the CSI measurement, the priority prediction value of the CLI measurement is obtained.

In step 1022, the reporting priority of the CLI measurement is determined based on the priority prediction value.

The priority prediction value is negatively correlated with the reporting priority, or the priority prediction value is positively correlated with the reporting priority.

For example, taking an example that the priority prediction value of the CLI measurement is $\text{Pri}_{iCLI}(y', k', c, s')$, the smaller the value of $\text{Pri}_{iCLI}(y', k', c, s')$, the higher the reporting priority of the CLI measurement, or the smaller the value of $\text{Pri}_{iCLI}(y', k', c, s')$, the lower the reporting priority of the CLI measurement.

For the specific implementation details of the above method for reporting the CLI measurement reference is made to those at the terminal side, and details will not be repeated here.

The following are embodiments of apparatuses of the present disclosure, which may be used to perform the embodiments of the methods of the present disclosure. For details not disclosed in the embodiments of the apparatuses of the present disclosure, reference may be made to the embodiments of the methods of the present disclosure.

Fig. 12 is a block diagram of an apparatus for reporting a CLI measurement provided by an embodiment of the present disclosure. The apparatus has the function of realizing the above method example at the terminal side, and the function may be realized by hardware or by hardware executing corresponding software. As shown in Fig. 12, the apparatus may include: a priority determining module 1200 configured to determine a reporting priority of the interference measurement.

In some embodiments, the priority determining module 1200 includes: a priority determination module 1201 configured to determine a reporting priority of the CLI measurement.

In some embodiments, the priority determination module 1201 includes: a priority determination submodule 1210 configured to determine the reporting priority of the CLI measurement based on configuration information of the CLI measurement.

In some embodiments, the priority determination submodule 1210 includes: a priority parameter determination unit 1220 configured to determine a priority parameter based on the configuration information of the CLI measurement; and a priority determination unit 1230 configured to determine the reporting priority of the CLI measurement based on the priority parameter.

In some embodiments, the priority determination unit 1230 includes: a priority prediction value determination subunit 1231 configured to perform integrated calculation on priority parameters corresponding to a plurality of pieces of configuration information to obtain a priority prediction value; and a priority determination subunit 1232 configured to determine the reporting priority of the CLI measurement based on the priority prediction value, where the priority prediction value is negatively correlated with the reporting priority, or the priority prediction value is positively correlated with the reporting priority.

In some embodiments, the priority prediction value determination subunit 1231 includes: a priority prediction value determination sub-subunit 1233 configured to perform the integrated calculation on the priority parameters corresponding to the plurality of pieces of configuration information by adopting an independent configuration formula to obtain the priority prediction value, in a case that the reporting of the CLI measurement is configured independently of the reporting of the CSI measurement; and a priority prediction value determination sub-subunit 1234 configured to perform the integrated calculation on the priority parameters corresponding to the plurality of pieces of configuration information based on a priority configuration formula of the reporting of the CSI measurement to obtain the priority prediction value, in a case that the reporting of the CLI measurement is configured based on the reporting of the CSI measurement.

In some embodiments, the priority prediction value determination sub-subunit 1233 is configured to: determine a priority parameter $y'$ corresponding to the reporting type; determine a priority parameter $k$ corresponding to the measurement type; determine a priority parameter $c$ corresponding to the serving cell index; determine a priority parameter $s'$ corresponding to the CLI measurement identifier; determine a priority parameter $N_{cells}$ corresponding to the serving cell number threshold; and determine a priority parameter $M_s'$ corresponding to the reporting number threshold. The independent configuration formula is as follows:

$$\text{Pri}_{iCLI}(y', k', c, s') = 2 \cdot N_{cells} \cdot M_s' \cdot y' + N_{cells} \cdot M_s' \cdot k' + M_s' \cdot c + s',$$

where $\text{Pri}_{iCLI}(y', k', c, s')$ is the priority prediction value.

In some embodiments, the priority prediction value determination sub-subunit 1234 is configured to: determine a priority parameter y corresponding to the reporting type; determine a priority parameter $k$ corresponding to the measurement type; determine a priority parameter $c$ corresponding to the serving cell index; determine a priority parameter s corresponding to the CSI measurement identifier; determine a priority parameter $N_{cells}$ corresponding to the serving cell number threshold; and determine a priority parameter $M_s$ corresponding to the reporting number threshold. The priority configuration formula is as follows:

$$\text{Pri}_{iCSI}(y, k, c, s) = 2 \cdot N_{cells} \cdot M_s \cdot y + N_{cells} \cdot M_s \cdot k + M_s \cdot c + s,$$

where $\text{Pri}_{iCSI}(y, k, c, s)$ is the priority prediction value.

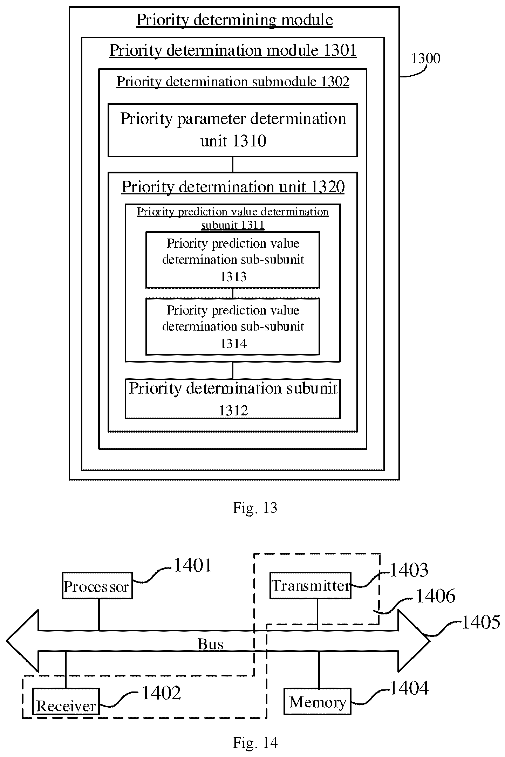

Fig. 13 is a block diagram of an apparatus for reporting a CLI measurement provided by an embodiment of the present disclosure. The apparatus has the function of realizing the above method example at the network device side, and the function may be realized by hardware or by hardware executing corresponding software. As shown in Fig. 13, the apparatus may include: a priority determining module 1300 configured to determine a reporting priority of an interference measurement by a terminal.

In some embodiments, the priority determining module 1300 includes: a priority determination module 1301 configured to determine a reporting priority of the CLI measurement by the terminal.

In some embodiments, the priority determination module 1301 includes: a priority determination submodule 1302 configured to determine the reporting priority of the CLI measurement based on configuration information of the CLI measurement.

In some embodiments, the priority determination submodule 1302 includes: a priority parameter determination unit 1310 configured to determine a priority parameter based on the configuration information of the CLI measurement; and a priority determination unit 1320 configured to determine the reporting priority of the CLI measurement based on the priority parameter.

In some embodiments, the priority determination unit 1320 includes: a priority prediction value determination subunit 1311 configured to perform integrated calculation on priority parameters corresponding to a plurality of pieces of configuration information to obtain a priority prediction value; and a priority determination subunit 1312 configured to determine the reporting priority of the CLI measurement based on the priority prediction value, where the priority prediction value is negatively correlated with the reporting priority, or the priority prediction value is positively correlated with the reporting priority.

In some embodiments, the priority prediction value determination subunit 1311 includes:

a priority prediction value determination sub-subunit 1313 configured to perform the integrated calculation on the priority parameters corresponding to the plurality of pieces of configuration information by adopting an independent configuration formula to obtain the priority prediction value, in a case that the reporting of the CLI measurement is configured independently of the CSI measurement; and

a priority prediction value determination sub-subunit 1314 configured to perform the integrated calculation on the priority parameters corresponding to the plurality of pieces of configuration information based on a priority configuration formula of the reporting of the CSI measurement to obtain the priority prediction value, in a case that the reporting of the CLI measurement is configured based on the reporting of the CSI measurement.

In some embodiments, the priority prediction value determination sub-subunit 1313 is configured to: determine a priority parameter $y'$ corresponding to the reporting type; determine a priority parameter $k$ corresponding to the measurement type; determine a priority parameter $c$ corresponding to the serving cell index; determine a priority parameter $s'$ corresponding to the CLI measurement identifier; determine a priority parameter $N_{cells}$ corresponding to the serving cell number threshold; and determine a priority parameter $M_s'$ corresponding to the reporting number threshold. The independent configuration formula is as follows:

$$\text{Pri}_{iCLI}(y', k, c, s') = 2 \cdot N_{cells} \cdot M_s' \cdot y' + N_{cells} \cdot M_s' \cdot k + M_s' \cdot c + s',$$

where $\text{Pri}_{iCLI}(y', k, c, s')$ is the priority prediction value.

In some embodiments, the priority prediction value determination sub-subunit 1314 is configured to: determine a priority parameter y corresponding to the reporting type; determine a priority parameter $k$ corresponding to the measurement type; determine a priority parameter $c$ corresponding to the serving cell index; determine a priority parameter s corresponding to the CSI measurement identifier; determine a priority parameter $N_{cells}$ corresponding to the serving cell number threshold; and determine a priority parameter $M_s$ corresponding to the reporting number threshold.

The priority configuration formula is as follows:

$$\mathrm{Pri}_{iCSI}(y, k, c, s) = 2 \cdot N_{cells} \cdot M_s \cdot y + N_{cells} \cdot M_s \cdot k + M_s \cdot c + s,$$

where $\mathrm{Pri}_{iCSI}(y, k, c, s)$ is the priority prediction value.

It should be noted that when the apparatuses provided in the above embodiments realize their functions, the description is made by only taking the division of the above functional modules as an example. In practical applications, the above function allocation may be completed by different functional modules according to actual needs, that is, the content structure of the apparatus is divided into different functional modules to complete all or part of the functions in the above description.

With regard to the apparatuses in the above embodiments, the specific way in which each module performs operations has been described in detail in the embodiments of the methods, and will not be described in detail here.

Fig. 14 is a block diagram of a communication device (a terminal or a network device) provided by an embodiment of the present disclosure. The communication device may include a processor 1401, a receiver 1402, a transmitter 1403, a memory 1404 and a bus 1405.

The processor 1401 includes one or more processing cores. By running software programs and modules, the processor 1401 executes various functional applications and performs GNSS measurements.

The receiver 1402 and the transmitter 1403 may be implemented as a transceiver 1406, which may be a communication chip.

The memory 1404 is connected to the processor 1401 through the bus 1405.

The memory 1404 may be used to store a computer program, and the processor 1401 is used to execute the computer program, so as to realize the steps executed by the communication device in the above method embodiments.

In addition, the memory 1404 may be realized by any type of volatile or nonvolatile memory device or their combination, including but not limited to: a random-access memory (RAM) a read-only memory (ROM), an erasable programmable read-only memory (EPROM), an electrically erasable programmable read-only memory (EEPROM), a flash memory or other solid-state storage technologies, a compact disc read-only memory (CD-ROM), a high-density digital video disc (DVD) or other optical storages, a magnetic tape cassette, a magnetic tape, a magnetic disk storage or other magnetic storage devices.

When the communication device is implemented as a terminal, the processor 1401 in the embodiments of the present disclosure may execute the steps executed by the terminal in any of the methods shown in Fig. 2 to Fig. 5, and when the communication device is implemented as a network device, the processor 1401 in the embodiments of the present disclosure may execute the steps executed by the network device in any of the methods shown in Fig. 6 to Fig. 9, which will not be repeated here.

In a possible implementation, when the communication device is implemented as the terminal, the transceiver is used to determine a reporting priority of a CLI measurement.

In a possible implementation, when the communication device is implemented as the network device, the transceiver is used to determine a reporting priority of a CLI measurement by a terminal.

An embodiment of the present disclosure also provides a computer-readable storage medium, in which a computer program is stored, and the computer program is used to be executed by a transceiver of a core network device, so as to realize the method for reporting the CLI measurement at the terminal side.

Optionally, the computer-readable storage medium may include a read-only memory (ROM), a random-access memory (RAM), a solid state drive (SSD), an optical disk, etc. The random access memory may include a resistance random access memory (ReRAM) and a dynamic random access memory (DRAM).

An embodiment of the present disclosure also provides a chip, which includes a programmable logic circuit and/or program instructions, and is used to realize the method for reporting the CLI measurement at the terminal side when the chip runs on the terminal.

An embodiment of the present disclosure also provides a computer program product or a computer program, which includes computer instructions stored in a computer-readable storage medium, and a processor of a terminal reads the computer instructions from the computer-readable storage medium and executes the computer instructions, so as to realize the method for reporting the CLI measurement at the terminal side.

It should be understood that the "indication" mentioned in the embodiments of the present disclosure may be a direct indication, an indirect indication, or an indication that there is an association. For example, A indicating B may mean that A directly indicates B, for example, B may be obtained through A; A indicating B may also mean that A indicates B indirectly, for example, A indicates C, and B may be obtained through C; A indicating B may also mean that there is an association between A and B.

In the description of the embodiments of the present disclosure, the term "correspond/correspondence/corresponding" may mean that there is a direct or indirect correspondence between two, or that there is an association between the two, or that there is a relationship between indicating and indicated, and between configuring and configured.

In the present disclosure, the term "multiple/a plurality of" refers to two or more. The term "and/or" describes an association of associated objects, and means that there may be three kinds of relationships, for example, A and/or B may mean that A exists alone, A and B exist together, and B exists alone. The character "/" generally indicates that former and latter associated objects have an OR relationship.

In addition, the step numbering described in the present disclosure only shows a possible execution sequence among steps. In some other embodiments, the above steps may be executed out of sequence, for example, two steps with different numbers are executed at the same time, or two steps with different numbers are executed in the reverse order of that shown in the drawings, which is not limited by the embodiments of the present disclosure.

Those skilled in the art should realize that in one or more of the above examples, the functions described in the embodiments of the present disclosure may be realized by hardware, software, firmware or any combination thereof. When implemented by software, these functions may be stored in a computer-readable medium or transmitted as one or more instructions or codes on a computer-readable medium. The computer-readable medium includes a computer storage medium and a communication medium, where the communication medium includes any media that facilitates the transfer of computer programs from one place to another. The storage medium may be any available medium that may be accessed by a general-purpose or special-purpose computer.

The above only relates to illustrative embodiments of the present disclosure, and is not intended to limit the present disclosure. Any modification, equivalent substitution, improvement, etc. made within the spirit and principle of the present disclosure should be encompassed in the protection scope of the present disclosure.

**Claims**

1. A method for reporting an interference measurement, performed by a terminal, and comprising:
   determining a reporting priority of the interference measurement.

2. The method according to claim 1, wherein determining the reporting priority of the interference measurement comprises:
   determining a reporting priority of a cross link interference (CLI) measurement.

3. The method according to claim 2, wherein determining the reporting priority of the CLI measurement comprises:
   determining the reporting priority of the CLI measurement based on configuration information of the CLI measurement.

4. The method according to claim 3, wherein determining the reporting priority of the CLI measurement based on the configuration information of the CLI measurement comprises:

   determining a priority parameter based on the configuration information of the CLI measurement; and
   determining the reporting priority of the CLI measurement based on the priority parameter.

5. The method according to claim 3 or 4, wherein the configuration information of the CLI measurement comprises at least one of:

   a reporting type;
   a reporting number threshold;
   a measurement type;
   a serving cell number threshold of the terminal;
   a serving cell index; or
   a CLI measurement identifier.

6. The method according to claim 5, wherein the reporting type comprises at least one of a reporting period type or a reporting channel type;

   the reporting period type comprises at least one of an aperiodic type, a periodic type or a semi-persistent type; and
   the reporting channel type comprises at least one of a physical uplink control channel (PUCCH) or a physical uplink shared channel (PUSCH).

7. The method according to claim 5, wherein the measurement type comprises at least one of a reference signal received power (RSRP) or a received signal strength indication (RSSI).

8. The method according to claim 5, wherein determining the reporting priority of the CLI measurement based on the priority parameter comprises:

performing integrated calculation on priority parameters corresponding to a plurality of pieces of configuration information to obtain a priority prediction value; and

determining the reporting priority of the CLI measurement based on the priority prediction value;

wherein the priority prediction value is negatively correlated with the reporting priority, or the priority prediction value is positively correlated with the reporting priority.

9. The method according to claim 8, wherein performing the integrated calculation on the priority parameters corresponding to the plurality of pieces of configuration information to obtain the priority prediction value comprises:

in a case that the reporting of the CLI measurement is configured independently of reporting of a channel state information (CSI) measurement, performing the integrated calculation on the priority parameters corresponding to the plurality of pieces of configuration information by adopting an independent configuration formula, to obtain the priority prediction value.

10. The method according to claim 9, wherein in a case that the reporting of the CLI measurement is configured independently of the reporting of the CSI measurement, performing the integrated calculation on the priority parameters corresponding to the plurality of pieces of configuration information by adopting the independent configuration formula to obtain the priority prediction value comprises:

determining a priority parameter denoted as $y'$ corresponding to the reporting type;

determining a priority parameter denoted as $k'$ corresponding to the measurement type;

determining a priority parameter denoted as $c$ corresponding to the serving cell index;

determining a priority parameter denoted as $s'$ corresponding to the CLI measurement identifier;

determining a priority parameter denoted as $N_{cells}$ corresponding to the serving cell number threshold; and

determining a priority parameter denoted as $M_s'$ corresponding to the reporting number threshold,

wherein the independent configuration formula is as follows:

$$\text{Pri}_{iCLI}(y', k', c, s') = 2 \cdot N_{cells} \cdot M_s' \cdot y' + N_{cells} \cdot M_s' \cdot k' + M_s' \cdot c + s',$$

wherein $\text{Pri}_{iCLI}(y', k', c, s')$ represents the priority prediction value.

11. The method according to claim 9, wherein,

in a case that the terminal simultaneously processes the reporting of the CLI measurement and the reporting of the CSI measurement on the same orthogonal frequency division multiplexing (OFDM), the reporting priority of the CLI measurement is lower than a reporting priority of the CSI measurement.

12. The method according to claim 8, wherein performing the integrated calculation on the priority parameters corresponding to the plurality of pieces of configuration information to obtain the priority prediction value comprises:

in a case that the reporting of the CLI measurement is configured based on reporting of a CSI measurement, performing the integrated calculation on the priority parameters corresponding to the plurality of pieces of configuration information based on a priority configuration formula of the reporting of the CSI measurement, to obtain the priority prediction value.

13. The method according to claim 12, wherein in a case that the reporting of the CLI measurement is configured based on the reporting of the CSI measurement, performing the integrated calculation on the priority parameters corresponding to the plurality of pieces of configuration information based on the priority configuration formula of the reporting of the CSI measurement to obtain the priority prediction value comprises:

determining a priority parameter denoted as $y$ corresponding to the reporting type;

determining a priority parameter denoted as $k$ corresponding to the measurement type;

determining a priority parameter denoted as $c$ corresponding to the serving cell index;

determining a priority parameter denoted as $s$ corresponding to the CLI measurement identifier;

determining a priority parameter denoted as $N_{cells}$ corresponding to the serving cell number threshold; and

determining a priority parameter denoted as $M_s$ corresponding to the reporting number threshold;
wherein the priority configuration formula is as follows:

$$\mathrm{Pri}_{iCSI}(y, k, c, s) = 2 \cdot N_{cells} \cdot M_s \cdot y + N_{cells} \cdot M_s \cdot k + M_s \cdot c + s,$$

wherein $\mathrm{Pri}_{iCSI}(y, k, c, s)$ represents the priority prediction value.

14. A method for reporting an interference measurement, performed by a network device, and comprising:
determining a reporting priority of the interference measurement for a terminal.

15. The method according to claim 14, wherein determining the reporting priority of the interference measurement for the terminal comprises:
determining a reporting priority of a cross link interference (CLI) measurement for the terminal.

16. The method according to claim 15, wherein determining the reporting priority of the CLI measurement for the terminal comprises:
determining the reporting priority of the CLI measurement based on configuration information of the CLI measurement.

17. The method according to claim 16, wherein determining the reporting priority of the CLI measurement based on the configuration information of the CLI measurement comprises:

determining a priority parameter based on the configuration information of the CLI measurement; and
determining the reporting priority of the CLI measurement based on the priority parameter.

18. The method according to claim 15 or 16, wherein the configuration information of the CLI measurement comprises at least one of:

a reporting type;
a reporting number threshold;
a measurement type;
a serving cell number threshold of the terminal;
a serving cell index; or
a CLI measurement identifier.

19. The method according to claim 18, wherein the reporting type comprises at least one of a reporting period type or a reporting channel type;

the reporting period type comprises at least one of an aperiodic type, a periodic type or a semi-persistent type; and
the reporting channel type comprises at least one of a physical uplink control channel (PUCCH) or a physical uplink shared channel (PUSCH).

20. The method according to claim 18, wherein the measurement type comprises at least one of a reference signal received power (RSRP) or a received signal strength indication (RSSI).

21. The method according to claim 18, wherein determining the reporting priority of the CLI measurement based on the priority parameter comprises:

performing integrated calculation on priority parameters corresponding to a plurality of pieces of configuration information to obtain a priority prediction value; and
determining the reporting priority of the CLI measurement based on the priority prediction value;
wherein the priority prediction value is negatively correlated with the reporting priority, or the priority prediction value is positively correlated with the reporting priority.

22. The method according to claim 21, wherein performing the integrated calculation on the priority parameters corresponding to the plurality of pieces of configuration information to obtain the priority prediction value comprises:
in a case that the reporting of the CLI measurement is configured independently of reporting of a channel state information (CSI) measurement, performing the integrated calculation on the priority parameters corresponding to the plurality of pieces of configuration information by adopting an independent configuration formula, to obtain the priority prediction value.

23. The method according to claim 22, wherein in a case that the reporting of the CLI measurement is configured independently of the reporting of the CSI measurement, performing the integrated calculation on the priority parameters corresponding to the plurality of pieces of configuration information by adopting the independent configuration formula to obtain the priority prediction value comprises:

> determining a priority parameter denoted as $y'$ corresponding to the reporting type;
> determining a priority parameter denoted as $k$ corresponding to the measurement type;
> determining a priority parameter denoted as $c$ corresponding to the serving cell index;
> determining a priority parameter denoted as $s'$ corresponding to the CLI measurement identifier;
> determining a priority parameter denoted as $N_{cells}$ corresponding to the serving cell number threshold; and
> determining a priority parameter denoted as $M_s'$ corresponding to the reporting number threshold,
> wherein the independent configuration formula is as follows:

$$\mathrm{Pri}_{iCLI}(y', k, c, s') = 2 \cdot N_{cells} \cdot M_s' \cdot y' + N_{cells} \cdot M_s' \cdot k + M_s' \cdot c + s',$$

> wherein $\mathrm{Pri}_{iCLI}(y', k, c, s')$ represents the priority prediction value.

24. The method according to claim 22, wherein,
in a case that the terminal simultaneously processes the reporting of the CLI measurement and the reporting of the CSI measurement on the same orthogonal frequency division multiplexing (OFDM), the reporting priority of the CLI measurement is lower than a reporting priority of the CSI measurement.

25. The method according to claim 21, wherein performing the integrated calculation on the priority parameters corresponding to the plurality of pieces of configuration information to obtain the priority prediction value comprises:
in a case that the reporting of the CLI measurement is configured based on reporting of a CSI measurement, performing the integrated calculation on the priority parameters corresponding to the plurality of pieces of configuration information based on a priority configuration formula of the reporting of the CSI measurement, to obtain the priority prediction value.

26. The method according to claim 25, wherein in a case that the reporting of the CLI measurement is configured based on the reporting of the CSI measurement, performing the integrated calculation on the priority parameters corresponding to the plurality of pieces of configuration information based on the priority configuration formula of the reporting of the CSI measurement to obtain the priority prediction value comprises:

> determining a priority parameter denoted as $y$ corresponding to the reporting type;
> determining a priority parameter denoted as $k$ corresponding to the measurement type;
> determining a priority parameter denoted as $c$ corresponding to the serving cell index;
> determining a priority parameter denoted as $s$ corresponding to the CLI measurement identifier;
> determining a priority parameter denoted as $N_{cells}$ corresponding to the serving cell number threshold; and
> determining a priority parameter denoted as $M_s$ corresponding to the reporting number threshold;
> wherein the priority configuration formula is as follows:

$$\mathrm{Pri}_{iCSI}(y, k, c, s) = 2 \cdot N_{cells} \cdot M_s \cdot y + N_{cells} \cdot M_s \cdot k + M_s \cdot c + s,$$

> wherein $\mathrm{Pri}_{iCSI}(y, k, c, s)$ represents the priority prediction value.

27. An apparatus for reporting an interference measurement, comprising:
a priority determining module configured to determine a reporting priority of the interference measurement.

28. An apparatus for reporting an interference measurement, comprising:
a priority determining module configured to determine a reporting priority of the interference measurement for a terminal.

29. A terminal, comprising:

a processor;
a transceiver connected with the processor; and
a memory configured to store instructions executable by the processor,
wherein the processor is configured to load and execute the instructions to perform the method for reporting the interference measurement according to any one of claims 1 to 13.

30. A network device, comprising:

a processor; and
a transceiver connected with the processor,
wherein the processor is configured to load and execute executable instructions to perform the method for reporting the interference measurement according to any one of claims 14 to 26.

31. A computer-readable storage medium, for storing at least one instruction, at least one program, a code set or an instruction set, which, when loaded and executed by a processor, cause the method for reporting the interference measurement according to any one of claims 1 to 26 to be performed.

32. A computer program product, comprising computer instructions stored in a computer-readable storage medium, wherein the computer instructions are configured to be acquired by a processor from the computer-readable storage medium, and to be loaded and executed by the processor, to cause the method for reporting the interference measurement according to any one of claims 1 to 26 to be performed.

Communication system 10

First network device
130

Second network device
140

First terminal 110

Second terminal 120

— · — · ▶ Co-channel interference of network
devices in cell

··········▶ Co-channel interference of
terminals in cell

Fig. 1

| A reporting priority of the interference measurement is determined | 210 |

Fig. 2

| A reporting priority of the CLI measurement is determined | 310 |

Fig. 3

| A reporting priority of the CLI measurement is determined based on configuration information of the CLI measurement | 410 |

Fig. 4

| A priority parameter is determined based on configuration information of a CLI measurement | 510 |

| Based on the priority parameter, the reporting priority of the CLI measurement is determined | 520 |

Fig. 5

Integrated calculation is performed on priority parameters corresponding to a plurality of pieces of configuration information to obtain a priority prediction value — 521

The reporting priority of the CLI measurement is determined based on the priority prediction value — 522

Fig. 6

A reporting priority of the interference measurement for (by) a terminal is determined — 710

Fig. 7

A reporting priority of the CLI measurement for (by) a terminal is determined — 810

Fig. 8

A reporting priority of the CLI measurement is determined based on configuration information of the CLI measurement — 910

Fig. 9

A priority parameter is determined based on configuration information of the CLI measurement — 1010

Based on the priority parameter, the reporting priority of the CLI measurement is determined — 1020

Fig. 10

Integrated calculation is performed on priority
parameters corresponding to a plurality of pieces
of configuration information to obtain a priority
prediction value

1021

The reporting priority of the CLI measurement is
determined based on the priority prediction value

1022

Fig. 11

Priority determining module

Priority determination module 1201

1200

Priority determination submodule 1210

Priority parameter determination
unit 1220

Priority determination unit 1230

Priority prediction value determination
subunit 1231

Priority prediction value
determination sub-subunit
1233

Priority prediction value
determination sub-subunit
1234

Priority determination subunit
1232

Fig. 12

Priority determining module

Priority determination module 1301

1300

Priority determination submodule 1302

Priority parameter determination
unit 1310

Priority determination unit 1320

Priority prediction value determination
subunit 1311

Priority prediction value
determination sub-subunit
1313

Priority prediction value
determination sub-subunit
1314

Priority determination subunit
1312

Fig. 13

Processor — 1401     Transmitter — 1403
                                          — 1406
                                          — 1405

Bus

Receiver — 1402     Memory — 1404

Fig. 14

## INTERNATIONAL SEARCH REPORT

| International application No. |
|---|
| **PCT/CN2023/078267** |

| A. | CLASSIFICATION OF SUBJECT MATTER |
|---|---|

H04W 24/10(2009.01)i

According to International Patent Classification (IPC) or to both national classification and IPC

| B. | FIELDS SEARCHED |
|---|---|

Minimum documentation searched (classification system followed by classification symbols)

IPC: HO4W H04Q H04B HO4L

Documentation searched other than minimum documentation to the extent that such documents are included in the fields searched

Electronic data base consulted during the international search (name of data base and, where practicable, search terms used)

CNTXT, CNKI, DPWI, ENTXT, 3GPP: 干扰, 测量, 交叉, 信道状态信息, 上报, 报告, 优先级, interference, measurement, CLI, cross link, report???, priority, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022021362 A1 (QUALCOMM INCORPORATED) 03 February 2022 (2022-02-03) description, paragraphs [0064]-[0141] | 1-32 |
| X | WO 2023014095 A1 (SAMSUNG ELECTRONICS CO., LTD.) 09 February 2023 (2023-02-09) description, paragraphs [0322]-[0333] | 1-32 |
| A | WO 2022010572 A1 (QUALCOMM INCORPORATED) 13 January 2022 (2022-01-13) entire document | 1-32 |
| A | CN 114982333 A (GUANGDONG OPPO MOBILE COMMUNICATIONS CO., LTD.) 30 August 2022 (2022-08-30) entire document | 1-32 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **13 November 2023** | **17 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/078267** |

| Patent document cited in search report | | | Publication date (day/month/year) | Patent family member(s) | | | Publication date (day/month/year) |
| --- | --- | --- | --- | --- | --- | --- | --- |
| WO | 2022021362 | A1 | 03 February 2022 | EP | 4190073 | A1 | 07 June 2023 |
| | | | | IN | 202227072449 | A | 27 January 2023 |
| | | | | CN | 116530163 | A | 01 August 2023 |
| WO | 2023014095 | A1 | 09 February 2023 | US | 2023090986 | A1 | 23 March 2023 |
| | | | | KR | 20230020254 | A | 10 February 2023 |
| WO | 2022010572 | A1 | 13 January 2022 | EP | 4179657 | A1 | 17 May 2023 |
| | | | | US | 2022014954 | A1 | 13 January 2022 |
| | | | | IN | 202247067230 | A | 09 December 2022 |
| | | | | CN | 115769522 | A | 07 March 2023 |
| CN | 114982333 | A | 30 August 2022 | WO | 2021168709 | A1 | 02 September 2021 |

Form PCT/ISA/210 (patent family annex) (July 2022)